# EUROPEAN PATENT APPLICATION

(11) **EP 3 503 180 A1**
(43) Date of publication of application: **26.06.2019**
(21) Application number: 17210379.8
(22) Date of filing: 22.12.2017
(51) Int. Cl.: H01L 23/522, H01L 23/528, H01L 23/00, H01L 27/02, G06F 17/50

(54) **A DECOUPLING CAPACITOR FOR AN INTEGRATED CIRCUIT**

(71) Applicant: Nagravision S.A., 1033 Cheseaux-sur-Lausanne (CH)
(72) Inventor: MARTIN, Jean-Marie, 74160 Archamps (FR); FRANCE, David, 1033 Cheseaux-sur-Lausanne (CH); GIROUX, Erick, 1033 Cheseaux-sur-Lausanne (CH); PETI-JEAN, Frederic, 1033 Cheseaux-sur-Lausanne (CH)
(74) Representative: Ipside

(57) **Abstract**

The present disclosure relates to semiconductor integrated circuits, and more particularly, to decoupling capacitors suitable for placement routing using standard cell technology. Embodiments described herein provide for localised decoupling to one or more targeted nets of an integrated circuit by providing de-coupling capacitor filler pad cells as part of a standard cell automatic place and route flow.

## Description

### INTRODUCTION

The present disclosure relates generally to the domain of semiconductor die or integrated circuits, and more particularly, to decoupling capacitors suitable for placement routing using standard cell technology.

### BACKGROUND

For many years it has been known that soldering a de-coupling capacitor to a power supply pin of an integrated circuit provides for some reduction in power supply noise within the integrated circuit. It is also known that improved reduction in power supply noise may be gained when the de-coupling capacitor can be directly implemented on the integrated circuit itself.

Unused spaces within the core of an integrated circuit may be used advantageously to allow de-coupling capacitors to be formed within the integrated circuit, close to a part of the circuit which is responsible for generating power supply noise. In the domain of standard cells for use in automatic placement and routing methodologies, cell libraries are available which have de-coupling capacitors which can be automatically placed and connected to the circuit at the parts where they may be required or in any unused spaces. Their effectiveness for the purpose of providing sufficient de-coupling may depend on how much unused core space is available and where it can be arranged for such free space to be located.

### BRIEF DESCRIPTION OF THE DRAWINGS

The present disclosure will be better understood thanks to the detailed description which follows and the accompanying drawings, which are given as non-limiting examples of embodiments, namely:
Fig. 1, illustrating a core-limited die in which an embodiment may be deployed;
Fig. 2, illustrating a pad-limited die in which an embodiment may be ;
Fig. 3, showing a semiconductor die having a conventional pad ring;
Fig. 4, showing a semiconductor die having a pad ring according to an embodiment described herein;
Fig. 5, showing detail of a part of a pad ring on which an embodiment is deployed;
Fig. 6, showing a semiconductor die having a mixed-signal circuit thereon, according to an embodiment described herein.;
Fig. 7, illustrating a method for creating cells for deployment in a semiconductor die according to an embodiment;
Fig. 8, illustrating an automated routine for laying out de-coupling filler pad cells and standard filler pad cells in an IC;

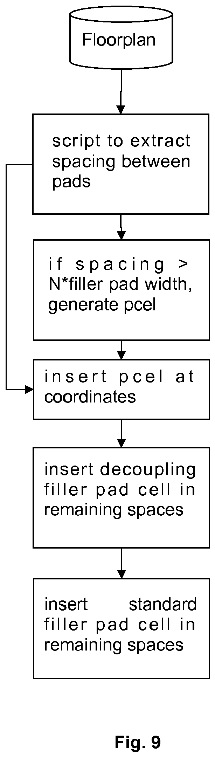

Fig. 9, showing a process for automated layout generation of a pad ring according an embodiment described herein.

### DETAILED DESCRIPTION

Semiconductor dice, otherwise known as integrated circuits IC may comprise analogue electronic circuits or digital electronic circuits. Some die may combine analogue circuitry and digital circuitry. Different parts of an IC may require to be powered at different voltage levels. For example, a first part of the IC may include digital circuitry which requires to be powered at 3 volts. This part of the IC may be located in a first region, irrigated by a network of VDD and VSS internal logic supply lines. Another part of the IC may require 1.5V supply, with a network of VAA low-power and VSS or GND supply lines routed accordingly. The IC may also include input/output circuitry requiring a 5V VCC supply, located near the pads for example and having its power supply routed accordingly. It is usually convenient to route the power supply lines at least partly in a ring around the die, hence they are generally known as power supply rings. Branches can then be tapped from parts of the rings to go to their respective parts of the die. Depending on the power consumption of various parts of the different circuits on the die, any of the power supply rings or branches may exhibit power supply voltage drops, which may be more or less severe at different locations according to the amount of current being drawn by the relevant circuitry.

According to an aspect, the present disclosure provides de-coupling capacitors which can be used to reduce voltage drop or otherwise provide filtering on one or more of the power supply rings of an integrated circuit. According to a particular embodiment, such voltage drop reduction or filtering may be provided for a particular node within the integrated circuit other than one of the power supply rings.

The core area of an integrated circuit, located substantially at the centre of the die, is generally where the main logic or analogue circuitry of the IC resides. In an embodiment, the core is near the centre of the chip and circuit elements located there are connected to the VDD power supply. The VDD supply line connects to a pad, usually near the edge of the IC, for bringing the power supply into the IC. The VDD power supply is also required to power circuitry in at least some of the other pads within the circuit. The pads can be said to form a ring around the IC. Hence the term pad ring is sometimes used. Each pad may include a more or less wide VDD connection and a ground connection GND. Consequently, the pad ring, formed by connecting up all of the pads, may have a VDD ring around the IC and a GND ring around the IC.

Some pads may require to be supplied by an I/O supply, different from the VDD supply, say VCC. In this case, the IC may therefore further include a third ring, a VCC ring, connected to those pads which require it. In one embodiment most of the pads may use VCC while the internal logic in the core uses VDD. In this case there would be one or more VDD pads to bring in the VDD connection to the core. The VDD may form a ring around the IC without actually connecting to those pads which do not need it. Conversely, all of the remaining pads may include circuitry which has to be connected to the VCC ring. An example of such circuitry would be a configuration of one or more diodes for providing electro-static discharge protections ESD. In an embodiment, all of the pads may be connected to a GND ring which comes from at least one GND pad and goes around the IC. Other power supply rings are also possible, such as VAA, VSS, etc...

According to an aspect, disclosure is made of V A semiconductor die having:
a core area comprising one or more electronic circuits having one or more power supply terminals and at least one input or output terminal; and
a plurality of pad standard cells having pads, for bringing power supply lines and input or output lines from outside of the die, via their respective pads, to at least the power supply and/or input or output terminals of the electronic circuits, the pad standard cells being arranged within a pad ring at least partially surrounding the core area;
   the pad standard cells comprising a plurality of conductive through-straps between a first edge and an opposite edge of the pad standard cell so that adjacent pad standard cells, when abutted, provide continuity of the power supply lines and/or the input or output line within the pad ring;
the pad ring further may comprise a de-coupling filler cell having a capacitor for de-coupling one of the power supply lines or the input or output line to an AC ground of the semiconductor die.

According to another aspect, a standard cell may be provided for use in an automated place and route methodology for semiconductor integrated circuit pad ring layout, the standard cell comprising:
a plurality of connection ports for connecting to a plurality of power supply lines and/or one or more signal lines; and
a plurality of through-straps for providing electrical connectivity from a first side of the standard cell at least to a second side of the standard cell such that a plurality of such standard cells, when placed in abutted formation, provide continuity of said connectivity throughout the plurality of standard cells;
wherein the standard cell may comprise a capacitor arranged to provide de-coupling from one of the power supply lines or the signal line to an AC ground of the standard cell.

According to yet another aspect, disclosure is made of an automated place and route method for providing a layout of a semiconductor integrated circuit co.mprising:
a core area;
and a pad ring at least partially surrounding the core area;
the core area being for one or more electronic circuits having one or more power supply terminals and at least one signal terminal; and
the pad ring being for bringing power supply lines and signal lines from outside of the die, via their respective pads, to at least the power supply and/or signal terminals of the electronic circuits;
the method comprising placing a de-coupling filler cell in the pad ring;
the de-coupling filler cell comprising a capacitor.

In certain applications, for example when an IC is a smartcard chip, there may be a limited number of input/output pins available. In some cases, only 3 pins may be available, in other cases up to 9. Consequently, there is often only one pin reserved for use as a power supply pin and one other pin reserved for use as a GND pin. This places some constraints on any internal voltage regulators which may be present in the IC in terms of maximum IR drop allowed or maximum noise, peak filtering, stability etc. Since no external capacitance can be placed on the smartcard package or anywhere near the smartcard chip, a solution needs to be found for increasing the total capacitance on the power supply.

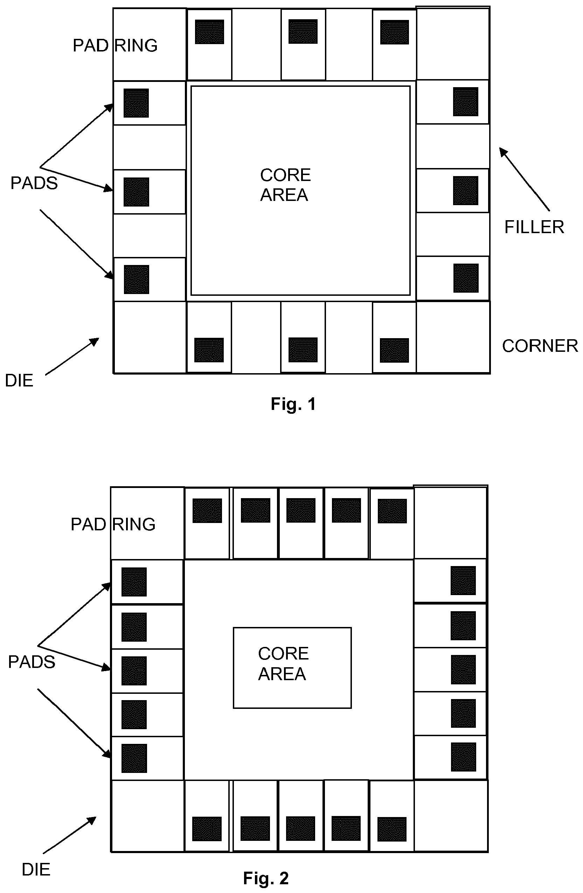

Again, since smartcards only have a small number of pads they are usually core limited in the sense that the size of the chip is governed by the size of the logic or otherwise active circuit area. Figure 1 shows an example of a core-limited smartcard. The size of the IC is determined by the amount of active circuitry, with the small number of pads being placed around the periphery. In order to join up the pad cells, a number of filler pad cells are placed between the pad cells. Filler pad cells are similar to pad cells but do not contain a pad since they do not need to accept a connection from outside of the IC. Their purpose is to provide continuity to any of the power supply rings used in the pad cells, thereby providing one or more continuous power supply rings around the IC when the periphery is filled with a combination of pad cells and filler pad cells. The rings may be made from metal or from doped substrate or well or sometimes a combination of one or more of these, as long as continuity is kept around the chip. As well as power supply rings, other signal lines may be required to form at least part of a ring going around the IC.

Embodiments may also find use in ICs having any core sizes or any pad sizes. Figure 2 illustrates an IC having a large pad ring compare to the core area. The pad ring includes input/output pad cells providing connectivity for signals from outside of the IC, power supply pad cells also providing connectivity of power from outside of the IC, ESD pad cells for providing electrostatic discharge damage protection to parts of the IC, corner pad cells, and filler pad cells, both of which are used to maintain continuity of the supply rings going around the IC as well as any other connections which may have to go around the chip via the pads.

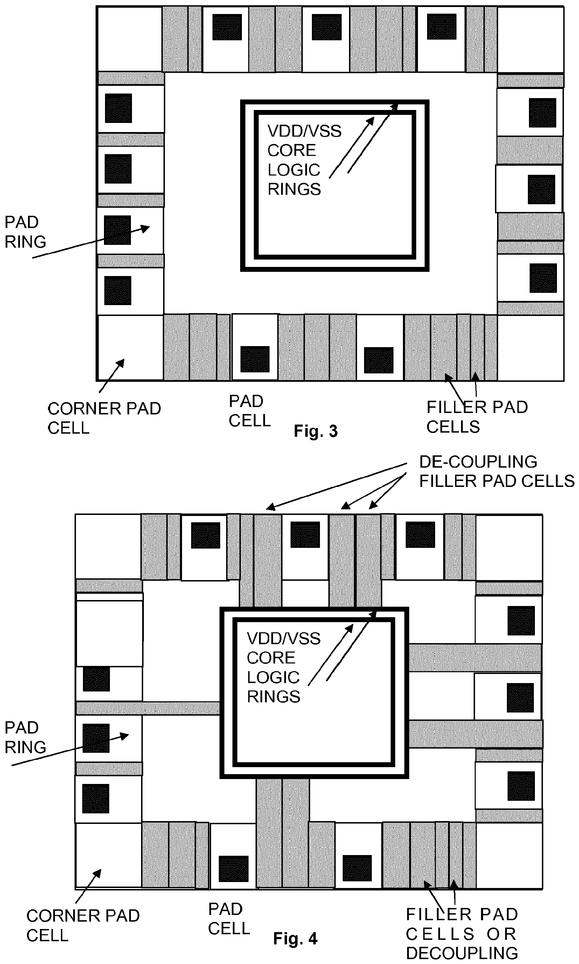

Figure 3 shows a semiconductor die with a core area for logic circuitry powered by VDD and VSS power supply lines arranged as rings within or near the core area and a pad ring, surrounding the core area, having filler pads, corner pads input/output pads and power supply pads arranged in a conventional manner. Due to fast switching of the logic circuitry, certain parts of the VDD power supply may be subjected to unwanted voltage drops or voltage ripple. In order to alleviate this, it is known to place capacitor cells in the core area near the places where they provide the most benefit, which is usually close to the logic which exhibits the highest switching currents.

Figure 4 shows an improvement to the known arrangement, as disclosed herein. According to an embodiment, filler pads, which mainly provide for continuity of connectivity between pad cells, may be replaced by de-coupling filler cells. These cells also provide continuity of connectivity exactly as the known filler cells, but they further include one or more electronic structures which serve as de-coupling capacitors. The de-coupling capacitors may be connected to parts of the power supply line which requires de-coupling, as shown in figure 4. Consequently, space may be recovered within the core either for including more circuitry or for providing even further de-coupling capacitors if required.

Embodiments disclosed herein may be used to provide de-coupling to, for example, a power supply ring for the core area of the IC, to a power supply ring for the input/output circuitry of the IC or for any pre-determined wire of the IC circuitry. Figure 4 shows de-coupling filler pad cells connected to the core power ring, illustrated as longer cells, and de-coupling filler pad cells connected to the I/O power supply ring, illustrated by the shorter de-coupling filler pad cells. Conventional filler pad cells may also be placed in the pad ring.

De-coupling filler cells according to different embodiments comprise a capacitor. The cell may be provided as part of a standard cell library for placement in the pad ring. Instead of using the filler pad cells of the known arrangement of figure 3 to simply provide continuity of the power rings, a suitably adapted de-coupling filler pad cell having a capacitor may be inserted in its place, thereby providing the required filtering once connected to the signal line or power line to be filtered.

A suitable standard cell library de-coupling filler cell or filler capacitor pad cell may be created, based on an already existing filler pad cell from a given standard cell library and adding a de-coupling capacitor to the cell. Different sizes of filler capacitor pad cells may be created in order to allow for as much space as possible to be filled by the automatic place and route tool using the new de-coupling filler capacitor pad cells.

Preferably, the filler capacitor pad cell should be able to be connected to the power ring for supplying the core of the IC and/or to the input/output supply ring and/or to any other supply ring or circuit net which may require to be filtered. The filler capacitor pad cell preferably gives a designer of an IC circuit the flexibility to choose how the cells should be distributed in order to locally optimise an input/output supply or core or other supply as required.

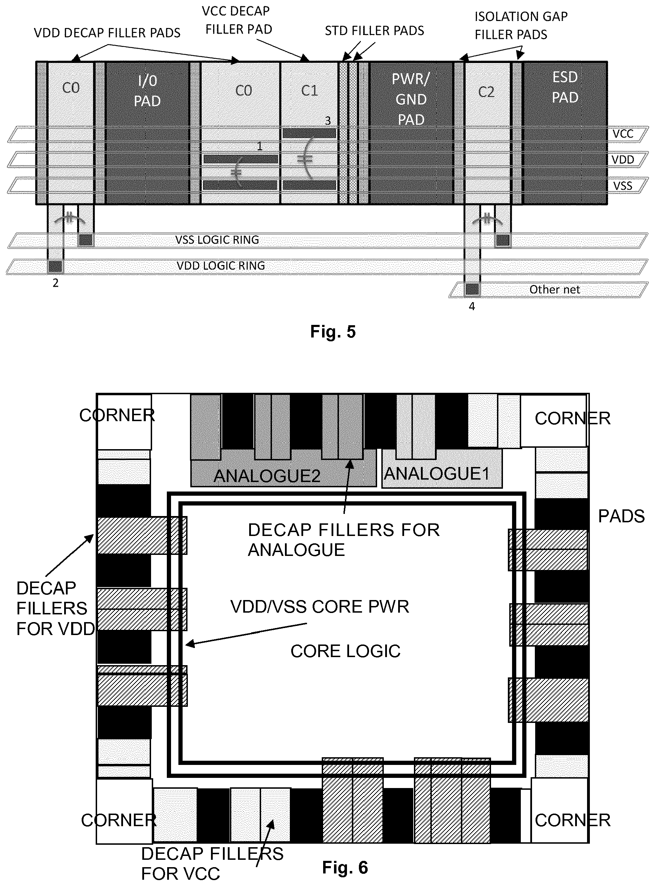

Figure 5 illustrates a part of a pad ring including a number of filler capacitor pad cells according to embodiments described herein. The pad ring has a VCC ring for the pads, a VDD ring for the pads, and a VSS ring for pads. The figure shows three nets which go towards the core of the IC: a VSS line for core logic, a VDD line for core logic and another line or net going somewhere in the IC. The other net may be another local power net, an analogue, or a digital signal for example. The pad ring includes an input/output pad cell, a power pad cell, two standard filler pad cells six isolation gap filler pad cells to electrically isolate at least some parts of certain pads from each other where required and four filler capacitor pad cells. When the cells are placed in abutted fashion, continuity of the routing of the various rings is ensured and lines or nets can be routed as required. In this particular example, the pads and the core share the VDD net as well as the VSS net. Two of the filler capacitor pad cells are used to provide de-coupling for VDD, one filler capacitor pad cell is used to provide de-coupling for VCC and one filler capacitor pad cell is used to provide de-coupling for the other net, which is numbered 4, a net going somewhere else in the IC which may require particular de-coupling effort. The de-coupling capacitor filler pad cells each comprise at least one capacitor having a first electrode and a second electrode, reachable via first and second terminals of the cell. De-coupling is provided by connecting one terminal to the net to be de-coupled and the other terminal to a suitable AC ground on the integrated circuit. In this example the AC ground is VSS.

In figure 5, the capacitors of the de-coupling filler pad cells are labeled C0, C1 and C2, while the connections are labeled 1, 2, 3 and 4. Capacitor C0 is being used for de-coupling the VDD net, C1 is being used to provide de-coupling to the VCC net and C2 is being used to provide de-coupling for the other net. Connections 1 ensure connectivity between the VDD pad power ring to first terminals of de-coupling capacitors C0; connection 2 ensures connectivity between the VDD logic power ring and the first terminal of the de-coupling capacitor C0; connection 3 ensures connectivity between the VCC pad power ring and a first terminal of the de-coupling capacitor C1; connection 4 ensures connectivity between the other net and a first terminal of the de-coupling capacitor C2. The second terminals of all of the de-coupling capacitors are connected to VSS, meaning that de-coupling is provided towards VSS, which is an AC ground. It is worth noting that the power or ground pad shown in figure 5, labeled PWR/GND PAD, is not shown as being connected to any of the rings shown. In this example this pad may be an analogue power supply or some other power supply. The VCC, VDD and VSS rings of figure 5 therefore are connected to VCC, VDD and VSS pads which are not shown in the figure.

Figure 6 shows an IC having a logic core and two different analogue circuit blocks. The core has positive and negative supply lines formed as two core rings VDD and VSS. Figure 6 also shows, as part of a pad ring around the periphery of the IC, a number of pads including input/output pads, ESD pads and various power supply pads for supplying the various different parts of the circuit. Filler capacitor pad cells can be seen placed around three edges of the IC and strapped to the VDD ring for the core logic, thereby providing localised de-coupling or filtering for VDD at various parts of the core logic where it is required. Other filler capacitor pad cells can be seen at the top edge of the IC, connected to the different analogue circuits at places where de-coupling is required. Thus VDD of the I/O ring and the core ring can be appropriately de-coupled. Filler capacitor pad cells are also shown for de-coupling the VCC power supply which is provided for the cells in the pad ring.

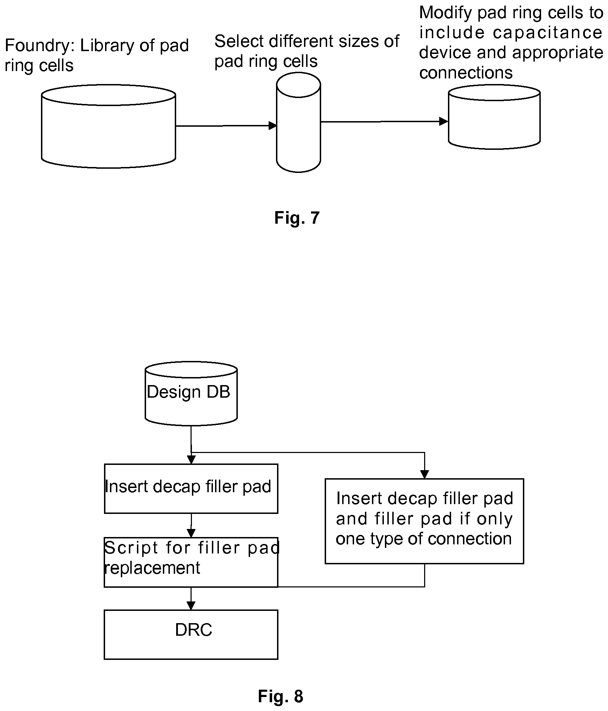

According to an embodiment, a new library cell is provided by copying a selection of a plurality of filler pad cells from a standard cell library and modifying the selected filler pad cells to create de-coupling filler pad cells having capacitors within the cells along with appropriate connections for connecting the capacitors to lines which require to be de-coupled. De-coupling filler pad cells of different sizes can thus be produced. Thus a cell library including filler capacitor pad cells is created. This is illustrated in figure 7.

A range of appropriately sized filler pad cells are selected from an automated place and route cell library and modified to include circuit structures which provide capacitance via two electrodes. The electrodes are brought to suitably placed terminals of the cell in order to be able to connect a first terminal to the net to be de-coupled and a second terminal to an AC ground node of the integrated circuit on which the cell will be deployed. Building de-coupling filler pad cells in this manner ensures that all of the required shapes are included to ensure good connections within the pad ring as required and to ensure that the cells are robust enough to handle the current densities in use.

Preferably, the filler capacitor pad cell is built based on a filler pad from the standard cell library which contains all the required shapes to ensure a good connection between the signal line to be de-coupled and the pad and which has the required robustness to withstand current density calculated for the particular signal line. The shapes can be modified in order to still respect the size and robustness requirements, but also to create the capacitance structure and the connections.

Figure 8 shows a process flow for automated insertion of appropriate fillers in a pad ring of an IC using cells from the design database, prepared as described above with new de-coupling filler cells according to embodiments described herein.

According to an embodiment, the capacitor of the de-coupling filler pad cell may be made from a MOSFET structure. A first terminal of such a capacitor would be the polysilicon gate of the MOSFET transistor structure, preferably for connecting to the net to be de-coupled, and a second terminal would be a combination of the source and drain of the transistor, preferably with source and drain shorted together. This terminal is preferably used for the AC ground of the circuit. In some embodiments the well of the MOSFET may also be used. Generally the well is either connected to the source and drain. In some cases a bias voltage may be provided for the well. In this case the capacitor may have three terminals.

According to another embodiment, a de-coupling filler pad cell may have its capacitor made from a metal structure. In one variation, both terminals of the capacitor may be made from metal. In other embodiments, either of one terminal may be connected to a metal structure and the other one may be connected to either a polysilicon structure or a structure comprised in the substrate of the semiconductor chip. According to yet another embodiment, both terminals of the capacitor may be connected to polysilicon structures. These capacitors include capacitance components due to plate capacitance, fringe capacitance and coupling capacitance.

## Claims

1. A semiconductor die having:
a core area comprising one or more electronic circuits having one or more power supply terminals and at least one input or output terminal; and
a plurality of pad standard cells having pads, for bringing power supply lines and input or output lines from outside of the die, via their respective pads, to at least the power supply and/or input or output terminals of the electronic circuits, the pad standard cells being arranged within a pad ring at least partially surrounding the core area;
the pad standard cells comprising a plurality of conductive through-straps between a first edge and an opposite edge of the pad standard cell so that adjacent pad standard cells, when abutted, provide continuity of the power supply lines and/or the input or output line within the pad ring;
**characterised in that**:
the pad ring further comprises a de-coupling filler cell having a capacitor for de-coupling one of the power supply lines or the input or output line to an AC ground of the semiconductor die.

2. The semiconductor die according to claim 1, wherein the continuity of the power supply lines and/or the input or output line within the pad ring is ensured by pad standard cells or de-coupling filler cells abutting each other.

3. The semiconductor die according to either of claims 1 or 2, wherein the pad ring further comprises one or more filler cells arranged between pad standard cells or de-coupling filler cells in order to ensure said continuity of power in the pad ring.

4. The semiconductor die according to any of the preceding claims, wherein any one of the conductive through-straps is connected to a capacitor of at least one of the de-coupling filler cells.

5. The semiconductor die according to any of the preceding claims, wherein the core area comprises one or more custom or standard cell digital electronic circuits and/or one or more custom or standard cell analogue electronic circuits.

6. A standard cell for use in an automated place and route methodology for semiconductor integrated circuit pad ring layout, the standard cell comprising:
a plurality of connection ports for connecting to a plurality of power supply lines and/or one or more signal lines; and
a plurality of through-straps for providing electrical connectivity from a first side of the standard cell at least to a second side of the standard cell such that a plurality of such standard cells, when placed in abutted formation, provide continuity of said connectivity throughout the plurality of standard cells;
**characterised in that**:
the standard cell comprises a capacitor arranged to provide de-coupling from one of the power supply lines or the signal line to an AC ground of the standard cell.

7. The standard cell according to claim 6, wherein said capacitor is one of: a MOSFET; or a parallel plate capacitor having plates made from metal or polysilicon, or a capacitor component.

8. Use of a standard cell having a capacitor as part of an automated place and route methodology for providing a pad ring layout in a semiconductor integrated circuit.

9. An automated place and route method for providing a layout of a semiconductor integrated circuit comprising:
a core area;
and a pad ring at least partially surrounding the core area;
the core area being for one or more electronic circuits having one or more power supply terminals and at least one signal terminal; and
the pad ring being for bringing power supply lines and signal lines from outside of the die, via their respective pads, to at least the power supply and/or signal terminals of the electronic circuits;
the method comprising placing a de-coupling filler cell in the pad ring;
the de-coupling filler cell comprising a capacitor.

10. The method according to claim 9, further comprising connecting one from the power supply lines or the signal lines to a first plate of a capacitor to an AC ground of the integrated circuit.
